# EUROPEAN PATENT SPECIFICATION

(11) **EP 0 310 600 B1**
(45) Date of publication and mention of the grant of the patent: **19.01.1994**
(21) Application number: 87902121.0
(22) Date of filing: 24.03.1987
(51) Int. Cl.: G06F 9/44, G06F 9/455

(54) **ARRANGEMENT FOR SOFTWARE EMULATION**
EINRICHTUNG ZUR SOFTWARE-EMULATION
AGENCEMENT SERVANT A L'EMULATION DE LOGICIELS

(43) Date of publication of application: 12.04.1989
(73) Proprietor: INSIGNIA SOLUTIONS LIMITED, High Wycombe, Buckinghamshire HP11 2NF (GB)
(72) Inventor: MACGREGOR, Roderick, High Wycombe Buckinghamshire (GB)
(74) Representative: Garratt, Peter Douglas
(86) International application number: GB8700202
(87) International publication number: WO8807718

(56) References cited:
- EP-A- 0 025 952
- EP-A- 0 109 567
- Communications of the ACM, vol. 15, no. 8, August 1972, ACM (New York, US) R. Rosin et al.: "An environment for research in microprogramming and emulation", pages 748-760.
- Elektronik, vol. 34, no. 25, 13 December 1985 (Berlin, DE) G. Hildebrandt et al.: "Z80-software läuft auf 68000-Systemen", pages 91-92.

## Description

This invention relates to data processing.

There exists a variety of commercially available processors which are capable of providing the central processing unit of a computer. Each processor can perform arithmetic, logical and control instructions and is adapted to cooperate with a particular organisation of memory and input and output devices. To a large extent, the instructions and the manner of addressing data held in the processor or stored in memory, are characteristics of a particular processor or family of processors. As a result, computer programs written for one computer - or range of computers based on a like processor - are frequently unsuitable for use with computers based on a different processor.

It is the case that a large body of commercially available software is based on a common operating system which can run only on particular processors. Computers which are based upon an incompatible processor are not capable of using such software even though the processor may in certain technical respects be superior to the processor for which the software is written. This problem of incompatibility has been recognised and attempts have been made to deal with the problem in two different ways. First, it has been suggested to provide in a computer based on a selected first processor, a second processor serving as a co-processor to provide the necessary compatibility. This obviously involves cost penalties. Second, it has been proposed to provide software by which the existing first processor is caused to emulate a different second processor. To be of practical utility, the emulation must not involve a significant drop in effective processing speed and this presents enormous difficulties, even where the processor being used is inherently faster than that being emulated so that the additional processing required by the emulation is to some extent offset by faster processing. It will he recognized that speed is important not only because a user may demand a fast response time, but also because a particular effective processing speed or minimum processing speed is essential for the correct functioning of certain programs.

Reference is directed to "Communications of the ACM, Volume 15 No. 8, August 1971, R Rozin et al; An Environment for Research in Microprogramming and Emulation, pages 748-760" this reference describes an arrangement for the emulation of a micro instruction set by the use of one or several nano instructions.

This invention focuses on the software emulation approach and for clarity hereafter the term "host" will be used to mean the processor which is through software caused to emulate a different processor (the emulated processor).

In what follows, particular attention will be paid to microprocessors though it should be understood that either or both of the host and emulated processors might take other forms.

To take a specific example, consider emulation of the microprocessor manufactured by Intel Corporation and referred to as 8088. This has an instruction set whose instructions are defined by some number of 8-bit bytes the first of which is an operating code (op-code). The instruction set comprises approximately 230 op-codes (not all possible instruction labels being used). Most instructions require one or more operands and the second byte of those instructions may be regarded as defining the mode of addressing the operand. This may recite specific memories or registers and may occasionally include data. In other microprocessors, it may be a byte other than the second byte of the instruction which performs a function comparable to that of the 8088 addressing mode

If it is desired to emulate the operation of the 8088 microprocessor, several characteristics of that processor must be emulated. Chiefly, the instruction set of the 8088 must be mapped on to that of the host microprocessor. Inevitably, there will not be a one to one mapping. In addition it will be necessary to recreate, using the facilities of the host microprocessor, the many permutations of addressing modes provided by the 8088. To interpret instructions using prior art techniques would require for each operating code (that is to say the first byte of each instruction) a routine which was capable of analysing the second and subsequent bytes of the instruction and providing an appropriate series of instructions in the instruction set of the host microprocessor. Having regard to the facts that there would inevitably be no direct mapping of operations between the emulated microprocessor and the host microprocessor and that there are likely to be differences in registers and memory addressing, the subroutine corresponding to each 8088 operating code would be complex and would typically involve a number of conditional statements serving to distinguish between different addressing modes. Running such a complex subroutine for every instruction, inevitably slows down processing. Further complications will arise in dealing with the flags (such as auxiliary carry and parity) which are provided by the 8088 but not by the host, and in handling interrupts.

It is one object of this invention to provide for the emulation of a microprocessor without a significant loss of effective speed. It is recognised that emulation will inevitably involve additional processing but its significance must be judged in terms of the processing speed of the host microprocessor. It is anticipated that the host microprocessor will have a faster processing speed than the microprocessor it is desired to emulate (perhaps by an order of magnitude) and the additional processing associated with the emulation will not result in a significant loss of effective speed provided that the amount of additional processing is of the same order or less than the increase in processing speed of the host.

Accordingly, the present invention consists, in one aspect, in a computer having a host instruction set and being adapted to be controlled by sequential instructions from an emulated instruction set, a substantial number of which emulated instructions comprise an operation code selected from a set of n such codes and a qualifying code selected from a set of m such codes, computer comprising processing means; first store means for storing a series of instructions from said emulated instruction set and second store means for holding instructions from set host instruction set, characterised in that said second store means has approximately n x m locations with each location corresponding to a consistent combination of operation code and qualifying code, the second store means holding at each location a series of host instructions corresponding to the said operation code and qualifying code, there being provided control means for identifying in substantially each emulated instruction the combination of operation code and qualifying code, accessing through said combination and without further decoding the location in said second store means corresponding with said combination and inputting in sequence to said processing means said host instruction strings.

By "qualifying code" is meant the next most significant byte or other discrete element in the instruction, after the instruction code.

In another aspect, the present invention consists in a process for controlling the operation of a data processing unit in a process for controlling the operation of a data processing unit having a host instruction set, in accordance with a received series of instructions from an emulated instruction set, where at least some of said emulated instructions each comprise an operator and an operand addressor, there being a finite number of permissible combinations of operator and operand addressor, characterised in that the process comprises the steps of storing a plurality of host instruction strings, one for each said permissible combination of operator and operand addressor; determining for each emulated instruction the particular combination of operator and operand addressor; accessing the appropriate host instruction string through said determined combination without further decoding and inputting the host instruction string to the data processing unit.

Preferably, the computer further comprises table means having entries corresponding with respective said locations, each entry comprising the address in said second store means of the said instruction string.

Advantageously, each instruction string is arranged to provide said control means with information relating to the address in said store means of the next instruction.

This invention will be described by way of example, with reference to the accompanying drawings in which:-
Figure 1 is a diagrammatic representation of aspects of the invention,
Figures 2A, 2B and 2C are listings of certain code strings in the language of the host microprocessor;
Figure 3 is a listing illustrating means for generating the code strings exemplified by the extracts of Figures 2A,2B and 2C;
Figures 4,5,6 and 7 are flow charts illustrating the operation of said generator means;
Figure 8 is an extract from the listing of the general generator Program as shown in Figure 4;
Figure 9 is an extract from the listing of the pseudo commands shown in Figure 5,
Figure 10 is an excerpt from the listing of the macro library shown in Figure 6 and
Figures 11A and 11B illustrate in diagrammatic form an interrupt technique according to the prior art and to the present invention respectively,

This description will continue to take as an example of a microprocessor whose operation is to be emulated, the 8088 chip manufactured by Intel Corporation, and will take as an example of a host microprocessor the MC68020 chip manufactured by Motorola Corporation. Before proceeding to a detailed description of the invention, it would be helpful to outline certain relevant aspects of the 8088 chip.

Two extremely important characteristics of the 8088, as with any other microprocessor, are the instruction set and the manner in which the addressing of data is handled. The instruction set includes arithmetic, logical and control instructions and takes the machine code form of a single byte op-code. There are, for example, six op-codes corresponding to the arithmetic assembly instruction ADD; the op-codes distinguishing between byte and word operation and between, for example, memory and register operands. The operand itself is defined in the second and - if necessary - succeeding bytes of the instruction string, it being recognised that certain op-codes demand no operand.

Data which is to be operated upon can be addressed in a variety of addressing modes. The data itself could for example form part of the instruction or be located in a processor register named in the instruction. Alternatively, the instruction could contain the address in memory at which the data is located or might state the register containing the address or the registers which require to be summed to obtain the memory address. The skilled man will be aware of still further addressing modes.

As outlined above, attempts have hitherto been made to emulate the 8088 using each op-code in the instruction string as the address in a single byte look up table which, for each op-code, point to necessary coding (in the machine language of the host microprocessor) to enable analysing of the addressing mode and other information contained in succeeding bytes of the instruction stream and to execute the decoded instruction. The difficulty with this approach is that the very flexibility in addressing modes which contributes to the power of the 8088 microprocessor results in coding strings of significant length and complexity for many of the op-code possibilities. As will be recognised, this means that the emulation runs at a slower effective speed than the microprocessor that is being emulated, unless the host microprocessor has a considerably faster processing speed.

According to this invention, a look up or jump table is provided which is addressed by each op-code and the immediately succeeding byte in the instruction stream. With nominally 256 possibilities for both the op-code and the next succeeding byte, the table accordingly has (nominally) 64K entries. From the very nature of the jump table - in which every consistent combination of op-code and addressing mode is represented a jump to any one location "implies" the addressing mode which is employed, without the need for decoding as such. Each entry in the jump table contains the address in memory of an instruction string in MC68020 code which will perform the equivalent function to the 8088 instruction. The 68020 coding which is required is straightforward (as compared with prior software emulations) since no decoding of the addressing mode is required. The need for conditional statements in the emulation coding is substantially avoided.

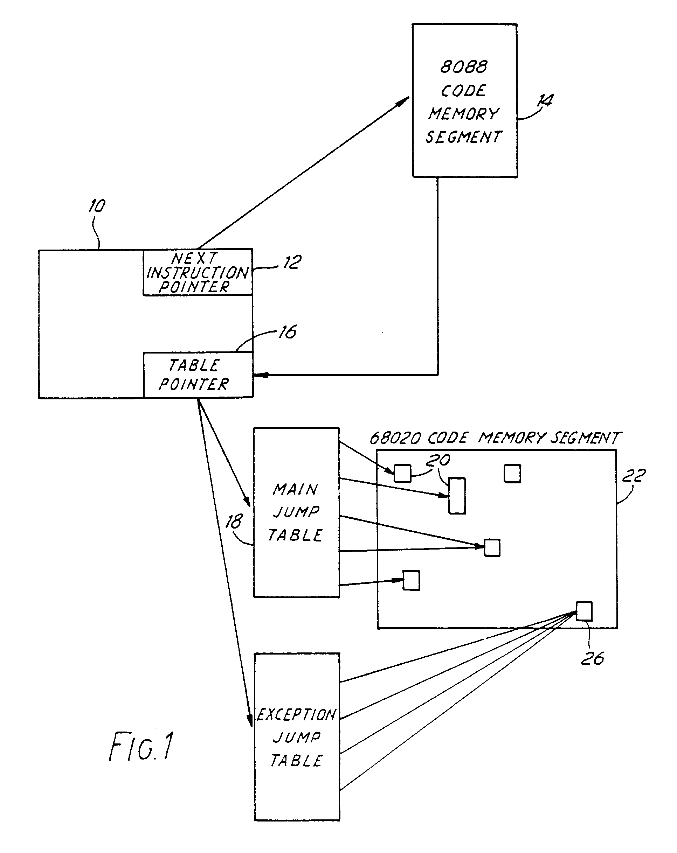

By way of further explanation, reference is directed to Figure 1 which is in diagrammatic form. The microprocessor 10 provides a "next instruction pointer " 12 whose function is to point to the next 8088 instruction held in code memory segment 14. In the 8088, the base or datum point of the instruction list is held in a code segment register. The address relative to the base address of the next instruction in the instruction stream (which may be regarded as the logical address) is held in a separate register referred to as the instruction pointer. This is in the most usual case incremented by an amount corresponding to the length of the last instruction although jumps can also be provided for. The physical memory address,which is 20 bits in the 8088, is constructed by adding the 16 bit content of the instruction pointer (logical address) to the 16 bit content of the code segment register (base address) with four low order zero's appended. In the present arrangement, the 68020 register a5 is used to hold the sum of the base address, the logical address and the base of the pseudo 8088 code memory segment. This makes the content of a5 a "physical" 32 bit 68020 memory address. This avoids the need for repeated add functions. If necessary (because of a jump or segment relocation, for example) the logical address can be reconstituted from a5 by subtraction.

In accordance with this invention, the fetched instruction is not executed directly by the processor, but the first two bytes are used in table pointer 16 to point to the appropriate entry in the 64K jump table 18. For a reason which will be described hereafter, the table pointer 16 includes a base table pointer (in 68020 register a4) acting as a base to the jump table addresses. Each jump table entry provides the 32 bit start address of an instruction string 20 in 68020 code memory segment 22. These instructions are then executed.

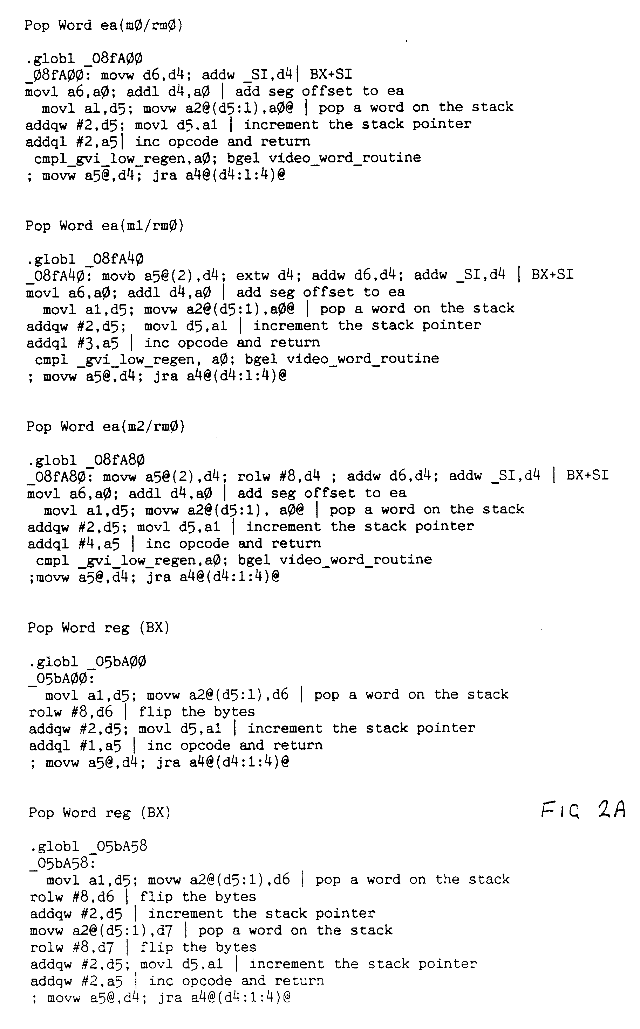

Reference is now directed to Figure 2A which is a listing of a number of 68020 instruction strings relating to the POP op-code which is taken as an example of an 8088 op-code. As will be understood, the POP command transfers the word at the current top of the stack to the destination operand. According to the addressing mode, the destination operand may be a register or may be a memory location pointed to by a particular register or combination of registers, with or without a displacement defined in the third or subsequent instruction bytes. The instruction strings are referred to by the label OXXAYY where XX is in hexadecimal the op-code and YY the addressing mode. In a typical situation, the addressing mode takes the form MOD 000 R/M where MOD represents the first two bits and states whether the three bit R/M element is to be regarded as defining the destination operand as a register or as a pointer in register to the destination operand in memory, with or without a displacement. Taking examples in turn from Figure 2A, label O8FA00 represents, in decoded form, op-code 10001111 (binary) and addressing mode code 00 000 000 where the addressing mode code has been broken up to identify the MOD and R/M components. In the first example, the destination operand is pointed to by the sum of registers BX (general register) and SI (source index), this being the meaning assigned to the R/M value 000 with an MOD value of 00. The 68020 coding at this location performs the POP function using essentially ADD and MOVE instructions. A detailed analysis of the coding is not believed to be necessary for an understanding of the invention but it can be identified that the destination address is first decoded from registers BX and SI, a word moved from the stack to that address and the stack pointer incremented by two so as to point to the next word in the stack.

Comparing the coding at the next location which corresponds to addressing mode 01 000 000, it would be seen that the coding is very similar but includes in the address computation a displacement. This is a single byte displacement as signified by an MOD value of 01. The next following location has a two byte displacement as signified by the MOD value 10.

With an op-code requring both source and destination operand, the addressing mode may take the form MOD REG R/M where REG identifies the word, byte and segment registers. For such an op-code, there are of course a greater number of permissible addressing modes and accordingly a greater number of entries in the jump table and corresponding 68020 code strings. Still other op-codes may take an addressing mode of further modified form.

If two contiguous op-codes are both of a kind requiring no operand, the address in the jump table can be of a string of 68020 code performing both instructions. This gives a net increase in speed.

By the way of further explanation, reference is drawn to Figure 2A and particularly to the entries under labels O5bA00 and O5bA58. The 8088 op-codes 58 to 5f (hexadecimal) are instructions which require no separate operands; the operand being implied within the op-code. Thus op-code 5b pops a word to register BX. Turning to Figure 2A it will be seen that the code string under label O5ba00 performs that function. If the second byte of the 8088 instruction is a further command of the same type (e.g. 58) the processor will by executing the code string shown under label O5bA58 execute both POP instructions, that is to say POP to BX followed by POP to AX. This optimisation procedure covers, in the present example, those register and segment variants of the POP and PUSH commands.

If the second byte of the instruction stream is not a POP or PUSH command, the jump table points in each case to the code string shown (in this example) under label O5bA00, the op-code poointer in a5 is incremented by one only and the second byte is treated as the first byte of the next instruction.

It will be recognised that in an emulation, means has to be provided for updating the information pointer analogue. According to a preferred feature of the present invention the coding which performs this task is contained at the end of substantially each 68020 code string. That is to say each code string provides for incrementing of the register a5 (analogous to the 8088 information pointer) by an amount equal to the length of the corresponding 8088 instruction.

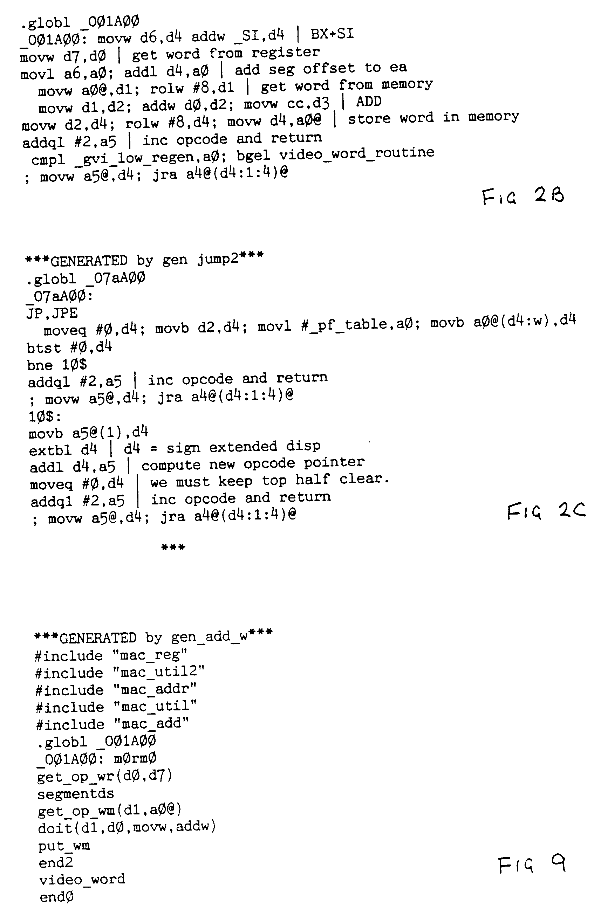

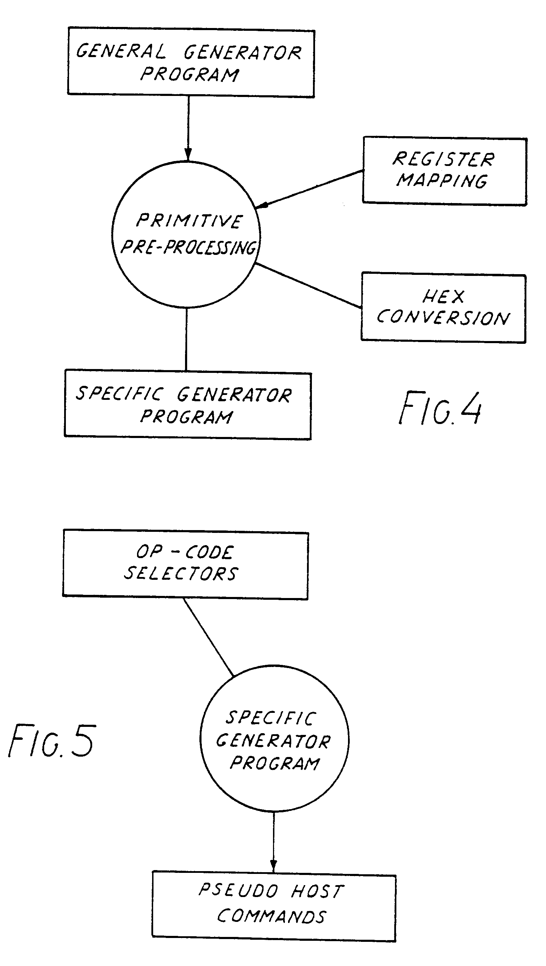

Referring again to the code strings shown in Figure 2, it will be noted that an add instruction of the form addql#x,a5 is included at every location. This is consistent throughout the entire array of 68020 code strings.

This increments the op-code pointer in register a5 by the number x of bytes occupied by the current instruction. Thus it will be seen that the coding for location O8FA00 includes the instruction of addql #2,a5, the 8088 instruction being a 2 byte instruction. As explained above that the following code string refers to the same op-code with an addressing mode that includes a displacement which (in MOD 01) is an 8-bit displacement extended to 16 bits. The operand accordingly requires 2 bytes, the entire instruction occupies 3 bytes and the coding is provided for incrementing by 3 the op-code pointer in register a5. In the next string, a 16-bit displacement is employed, the instruction requires 4 bytes and coding is provided to add 4 to the op-code pointer.

In addition to incrementing the op-code pointer, the code string serves through move and jump commands (in particular:-movw a5@,d4; jra a4@(d4:l:4) to take the processor directly to the 68020 code string whose address is contained in the jump table entry pointed to by the next 8088 instruction. It will be noted that the jump is made with respect to a base table pointer held in register a4, as noted above.

The penalty in memory space paid for adding this extra coding to every string is negligible, but the ability to move directly to the 68020 instruction string corresponding to the next 8088 instruction does provide a significant advantage in processing time

It will be well known to the skilled man that under certain situations it is necessary to depart from the strict sequence of "fetch, execute, fetch, ..." instructions described above. This will usually involve the use of so-called interrupts. These may be used to enable the microprocessor to interact with input or output devices operating at different speeds. The interrupt mechanism can also be used to divert control from the microprocessor to a special routine held in memory.

It has been mentioned above that a particular difficulty in emulation arises with providing an interrupt handling capability. In the normal case, asynchronous interrupt requests that are supplied to the 8088 will only take effect at the end of the current instruction. With the emulation, however, it cannot be guaranteed that an interrupt will not occur part way through a 68020 code string, possibly causing a crash. In accordance with a preferred feature of this invention, an asynchronous interrupt is caused to alter the jump table base point in a4. This has no immediate effect but at the end of the current 68020 instruction string, the instruction jra a4@(d4:l:4) causes a jump to be made not to the main jump table as previously described but to an exception jump table. This is illustrated in Figure 1 at 24. This exception jump table again has 64K entries but each points to a common piece of coding 26 in the 68020 code memory segment which processes the interrupt. A similar techniqe is used to deal with segment override.

It has been mentioned that the 8088 maintains a series of flags, these comprising three control flags and six status flags. Many of the arithmetical op-codes affect the status flags in particular and it is an essential requirement of a workable emulation of the 8088 processor that the information embodied in the flags be available for immediate access. In one approach, the coding at each location of the jump table corresponding with an op-code known to affect flags would update analogous flags held in one or more registers of the host microprocessor. In accordance with a preferred feature of this invention, however, an alternative approach is adopted and no attempt is made to keep all flags continuously updated. Rather, the necessary information is held to enable generation of the flags immediately a request is received for access to the flags. Taking into account the expected frequency of operations which, on the one hand affect flags and on the other are dependent upon flag information, the approach preferred in this invention represents a significant saving in processing time.

By way of further explanation, the 8088 processor uses bit 2 of the status word as a parity flag. This is arranged to hold at all times the parity of the last byte result and is used, for example, in instructions such as "Jump on the parity". It happens that the 68020 processor does not automatically maintain a parity flag. According to the preferred feature of the present invention, any 68020 code string which performs the function of an 8088 instruction affecting parity, is arranged to leave the last result byte in register d2. Reference is drawn, for example, to Figure 2B which is the 68020 code string for the label O01A00, being one of the ADD instructions. It will be seen from line 5 that the result of the "add word" instruction is put in register d2. In line 6 this result is moved to register d4, rotated (taking into account the differing conventions on high and low bytes between the 8088 and the 68020) and moved to the address previously set up in register a0. The result however remains in register d2.

Turning to Figure 2C, there is shown the 68020 code string for the label O7aA00 which is a "jump on even parity" instruction. It will be seen from line 1 that the result byte from d2 is moved to register d4, which has previously been zeroed. A look up is then performed in a parity table "PF table", which hold for each 256 values of the byte result, the appropriate parity value 0 or 1. This parity value is placed in register d4 and, in line 2, a byte test operation is performed to provide the subject for the jump in line 3.

A similar problem arises with the auxiliary carry flag which is not provided in the 68020 processor. This is handled in a manner analogous to that described above for the parity flag.

Even taking into consideration the fact that there are slightly less than 256 op-codes and the fact that not every addressing mode is appropriate for each op-code, the creation of the 68020 code strings as described above is a major undertaking. With knowledge of the amount of coding typically required at a single location, it is thought that approximately 300,000 lines of coding are involved. To write, and perhaps more importantly to debug this amount of code probably would be regarded as impractical for a commercial product. According to a further aspect of this invention, however, a method is provided for the automatic generation of the necessary coding. This will now be described in detail.

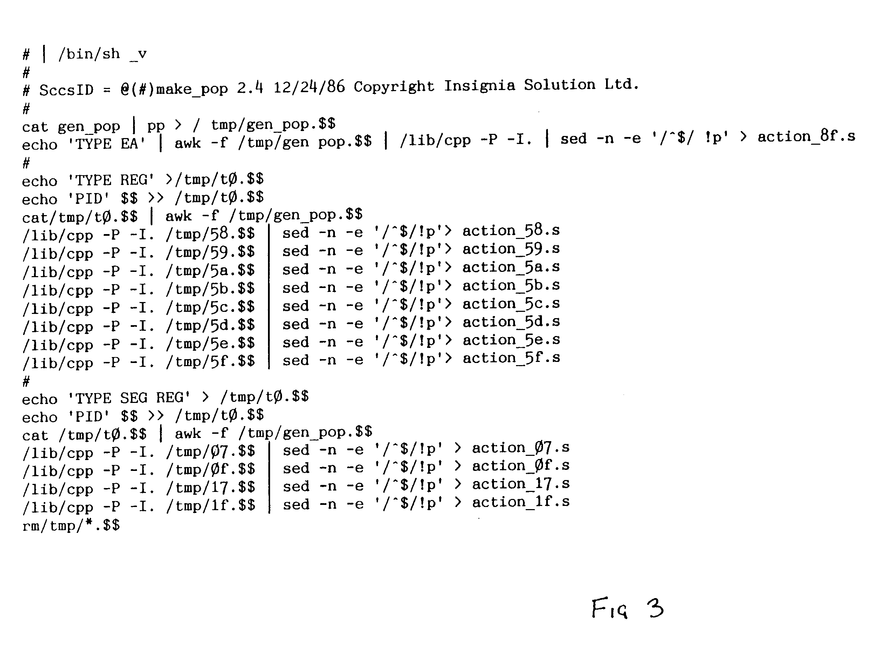

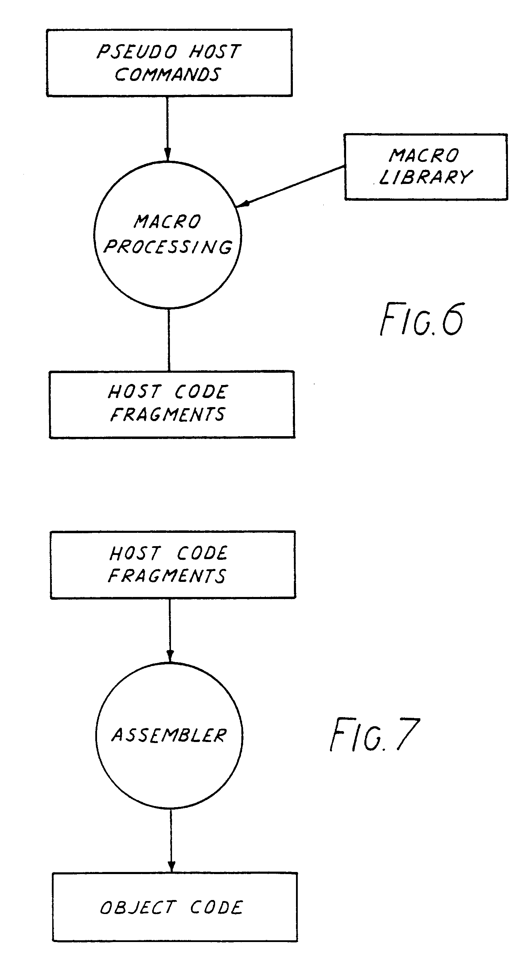

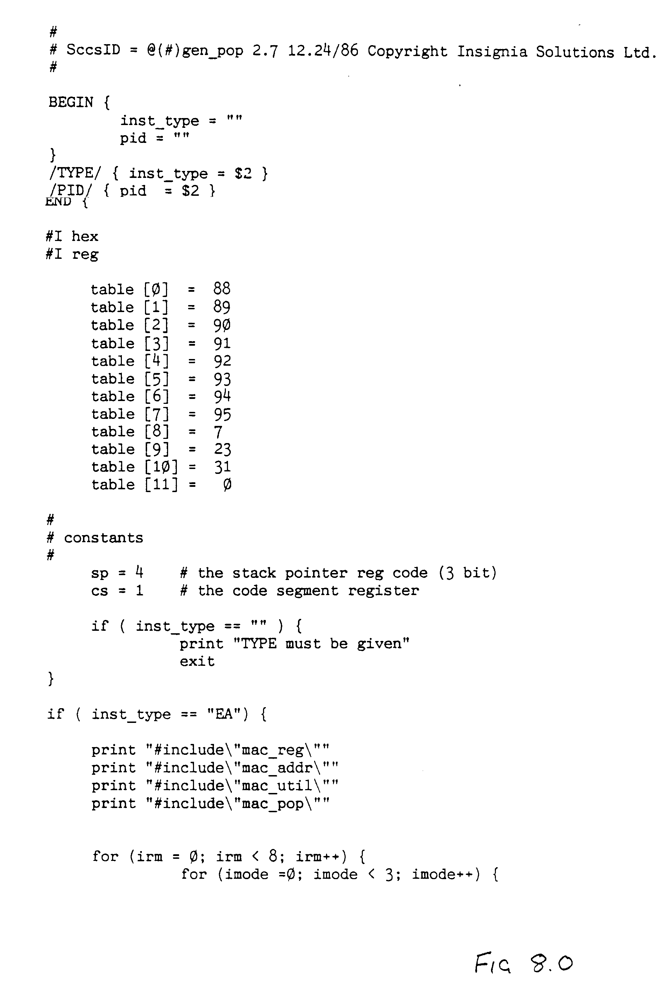

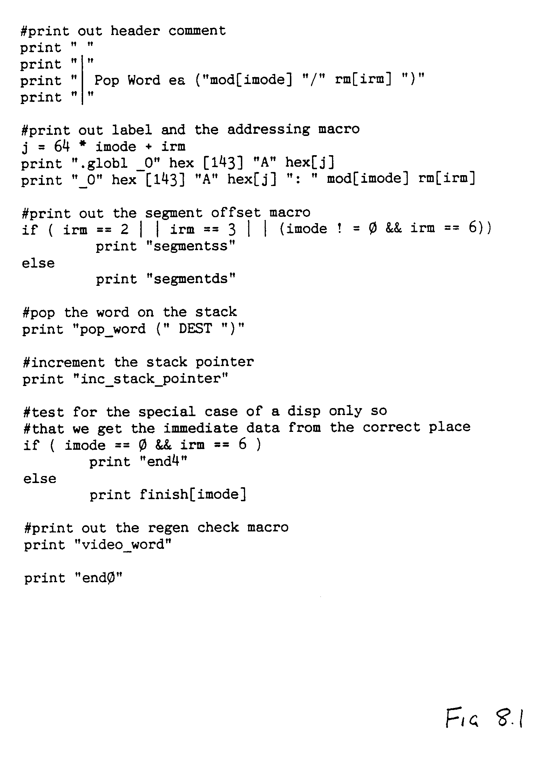

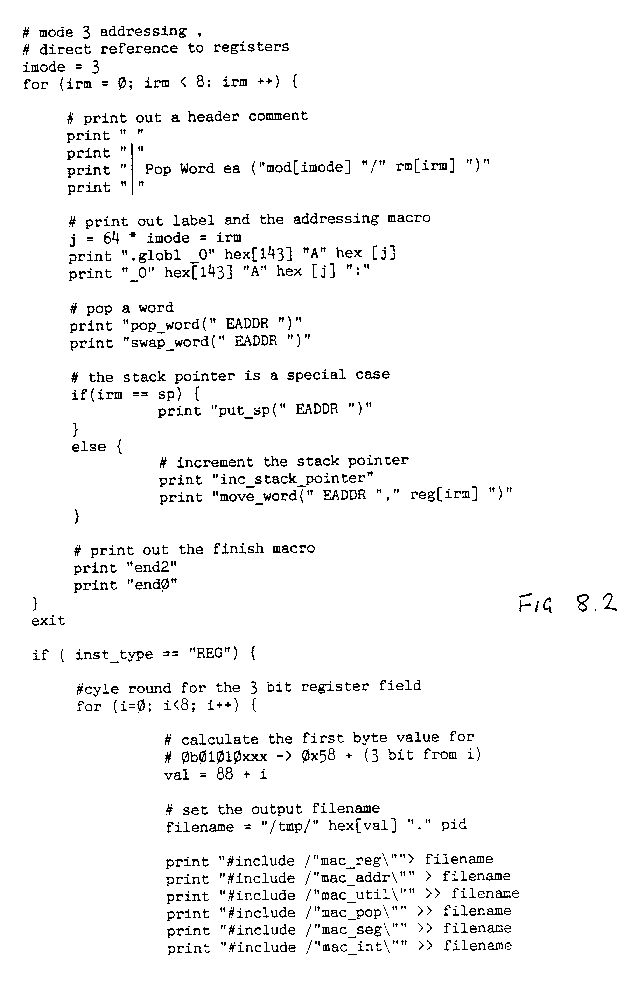

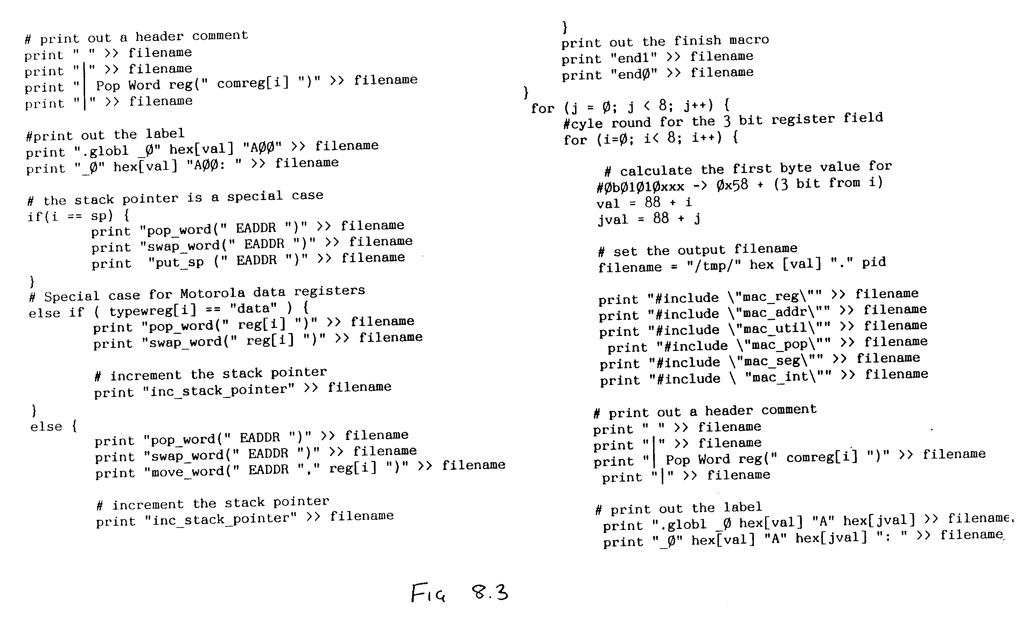

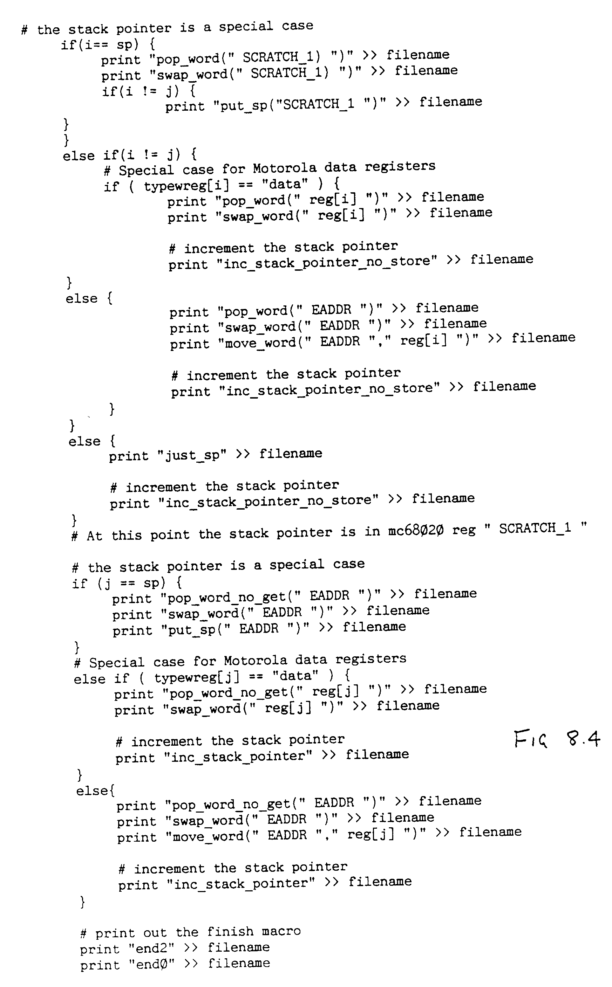

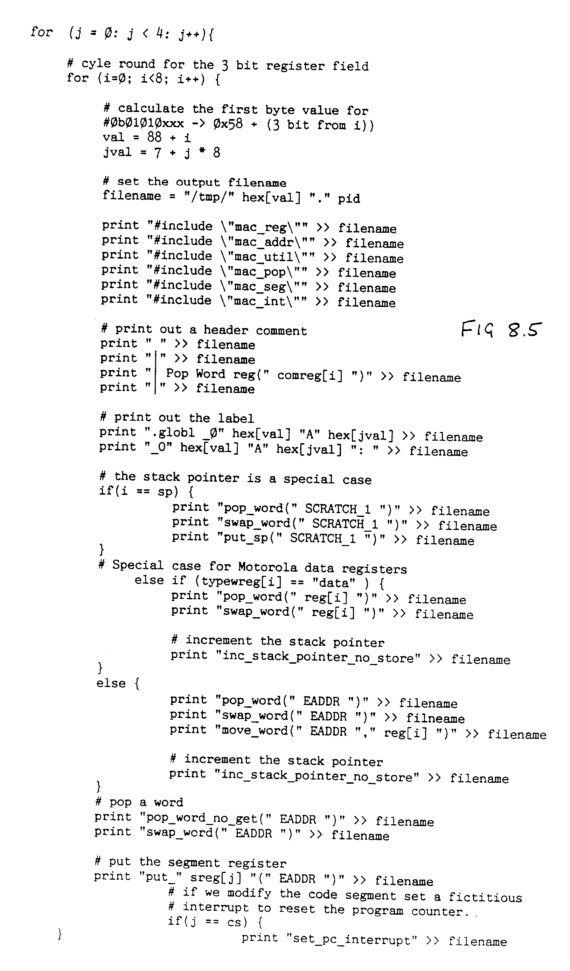

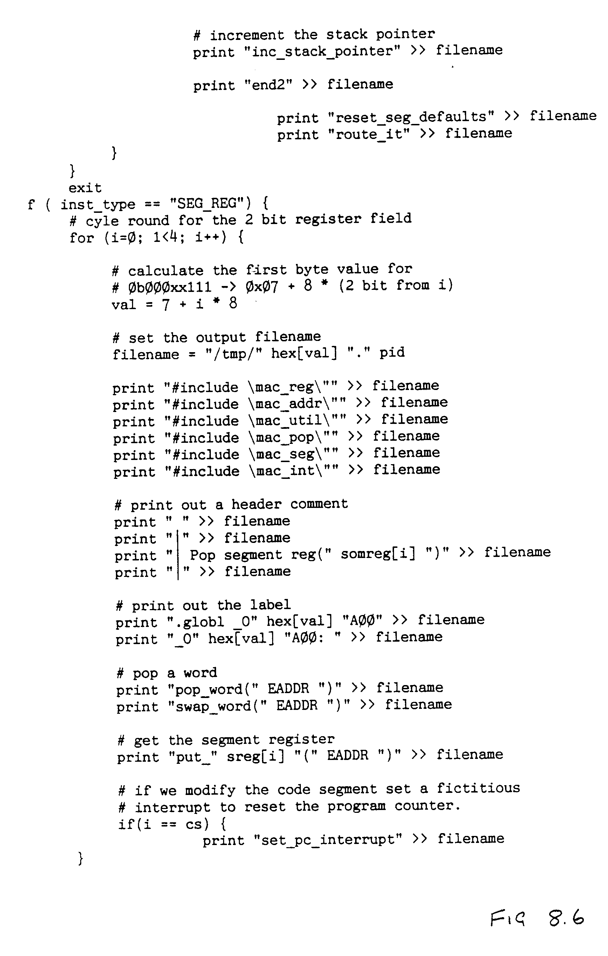

A separate code generator is provided for each 8088 op-code or each category of op-codes. Continuing with the example of the POP instructions, a "make POP" generator is provided and a specific example of this is shown in the listing which is Figure 3. Referring to the diagram which is Figure 4, it will be seen that a primitive preprocessing stage takes a generalised generator program such as that exemplified in the listing of Figure 8 to produce a specific generator program for the host microprocessor. In this preprocessing stage, information is taken from a register mapping table which maps the 8088 registers on to the registers available on the host. It is, if necessary, possible to map an 8088 register onto a memory address. The primitive preprocessing stage also makes reference to a hex look-up table, which provides hexadecimal equivalents.

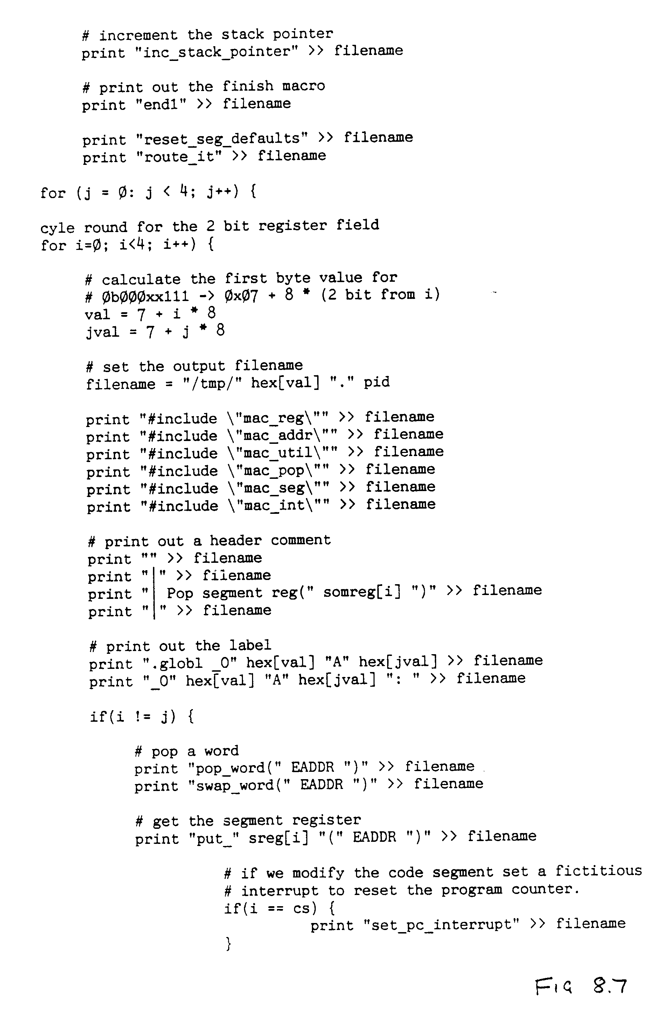

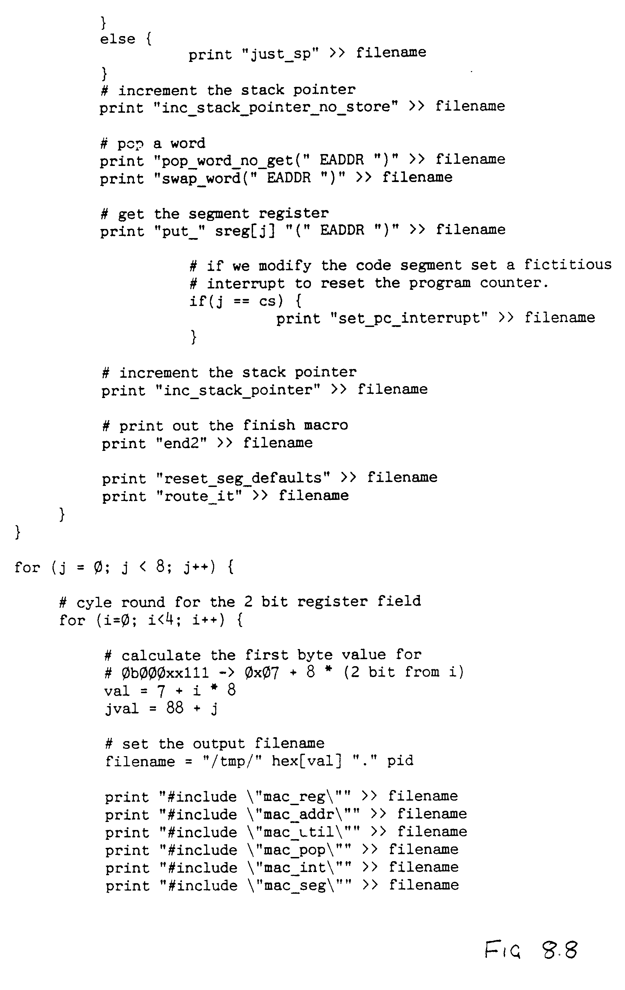

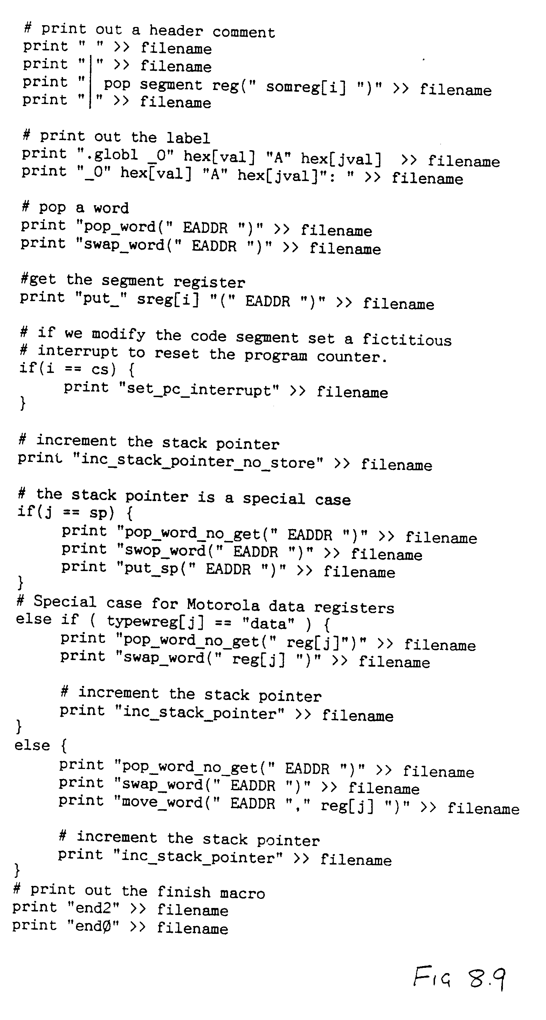

The specific generator program, as illustrated in Figure 5, is then driven by op-code selectors to produce so-called pseudo-host code fragments, an example of which appears in Figure 9. These refer extensively to macros. As illustrated in Figure 6, a macro processing stage then converts the pseudo-code fragments into the required code string by referring to a macro library. There is contained in Figure 10 an excerpt from the macro library containing those macros referred to in the pseudo-host code fragments of Figure 9. The output of this macro processing stage is the code string O01A00 as shown in Figure 2B which is, in a final assembly process illustrated in Figure 7, converted into object code.

It will be well known to the skilled man that certain microcomputers based on the 8088 chip transfer processing control, under certain circumstances, to selected portions of 8088 code held in ROM. These code portions may represent service routines for communicating with input and output devices, for example. The service routines can also be called by application programs, providing a standard interface.

According to a preferred form of this invention, provision is made for service routines which are in 68020 code and can thus be executed by the host processor in "native" mode, that is to say without reference to the jump table. The service routines can be written in a high level language such as "C", and then compiled. This is a considerable advantage for programmers.

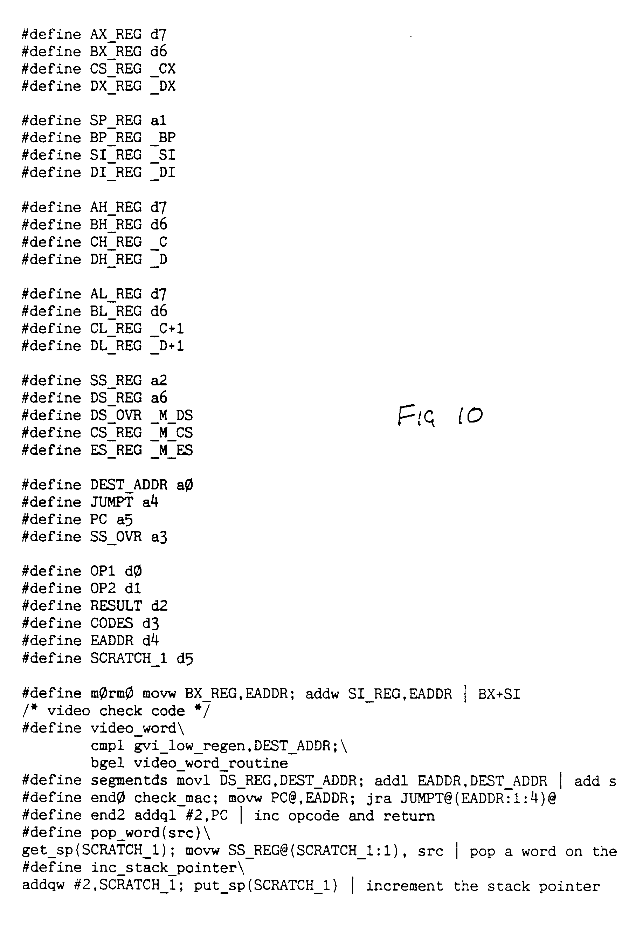

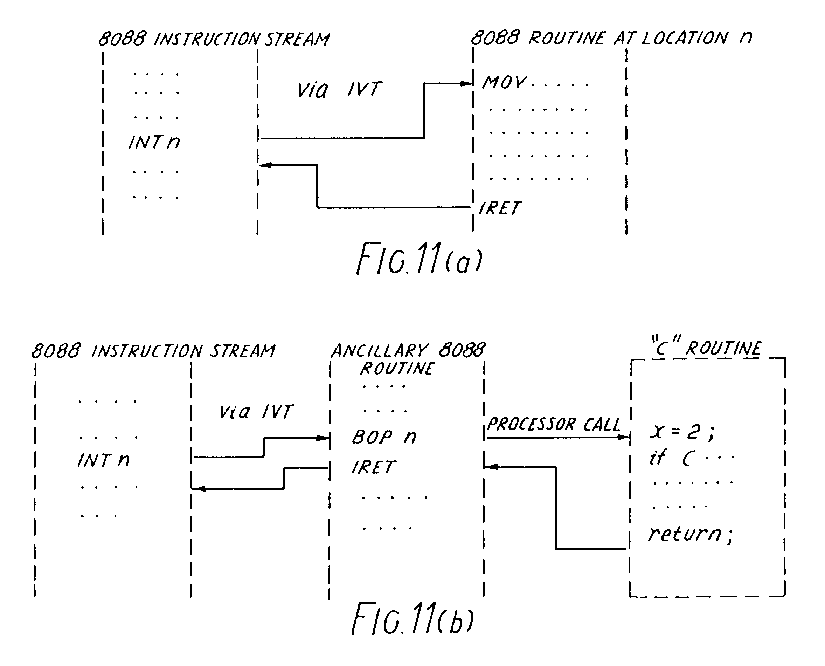

The 8088 command transfers control to a memory location which - instead of marking the beginning of a sequence of 8088 commands, terminating with IRET - contains a pseudo-8088 command. By "pseudo-command" is meant an op-code which is not given a definition in the 8088 instruction set. Depending upon the operand of the pseudo-command, a program call is made to an indexed high level language routine. By this ingenious means it is possible to call a high level language routine in a manner which is transparent to software running on the emulation. This use of a pseudo-command can be better understood by reference to Figures 11A and 11B which illustrate in diagrammatic form the use of a software interrupt respectively in conventional form and in accordance with a preferred feature of this invention. Referring to Figure 11A, the instruction INT n in the program which is running causes control to be passed from the CPU to a service routine defined by the Interrupt Vector Table (IVT) and the INT operand n. The service routine comprises a series of 8088 instructions terminated by the IRET instruction. Turning now to Figure 11B, the instruction INT n results in control being transferred to a location defined again through the IVT. At that location, there is the pseudo-command BOP n causing a program call to be made at location n in a high level language program store. The service routine may typically be written in C. The service routine returns control to the BOP instruction string and the emulation process continues as previously described. Typically the next instruction following the BOP command will be the 8088 instruction IRET.

In addition to providing for fast running of fixed service routines, this technique enables the host processor to communicate effectively with input and output devices. It should be understood that this invention has been described by way of example only and whilst those examples have been confined to emulation of the Intel 8088 on a Motorola microprocessor, the invention should not be regarded as restricted in any sense to this application.

In the described example, the jump table is accessed using the first two bytes of the 8088 instruction which in a typical case comprise the the operation and addressing mode respectively. This second byte may in most cases be regarded as the operand addressor since it points to or contains the operand. As has been explained the second byte may occasionally represent a second instruction and there may still be advantage in dealing with both bytes together. In some other cases, the value of the second byte is redundant to the jump process. In other emulations the operation code and such functions as the operand addressor may not form the first two bytes. In some cases it will be appropriate to use the operation code and the next most significant element in the instruction stream, for the purposes of accessing the host code strings.

Whilst a jump table is the preferred manner of accessing the host instruction strings, other methods may be employed. Thus, with appropriate indexing, control might be passed directly to the start of the host instruction string.

The described method of generating the host instruction strings is felt to have considerable advantages but alternatives within the scope of this invention will exist.

The feature by which each location contains coding for addressing the next instruction; the manner in which interrupts are handled and the manner in which flags are dealt with are believed to represent further and separately novel advances.

## Claims

1. A computer having a host instruction set and being adapted to be controlled by sequential instructions from an emulated instruction set, a substantial number of which emulated instructions comprise an operation code selected from a set of n such codes and a qualifying code selected from a set of m such codes, computer comprising processing means; first store means for storing a series of instructions from said emulated instruction set and second store means for holding instructions from said host instruction set, characterised in that said second store means has approximately n x m locations with each location corresponding to a consistent combination of operation code and qualifying code, the second store means holding at each location a series of host instructions corresponding to the said operation code and qualifying code, there being provided control means for identifying in substantially each emulated instruction the combination of operation code and qualifying code, accessing through said combination and without further decoding the location in said second store means corresponding with said combination and inputting in sequence to said processing means said host instruction strings.

2. A computer according to Claim 1, wherein said control means includes table means having entries corresponding with respective said locations, each entry comprising the address in said second store means of the said instruction string.

3. A computer according to Claim 1 or Claim 2, wherein each host instruction string is arranged to provide said control means with information relating to the address in said first store means of the next instruction.

4. A computer according to Claim 1, wherein said control means includes a jump table means having for substantially each permissible combination of said operation code and said qualifying code an entry comprising the address of the corresponding location in said second store means.

5. A computer according to Claim 4, wherein the last instruction in the string of instructions held at each location in the second store means comprises a jump instruction with reference to the entry in said jump table appropriate to the next instruction in said series of instructions stored in said first store means.

6. A computer according to Claim 4 or Claim 5, wherein said control means is adapted to reference the jump table means via a base point and is further adapted to alter said base point on receipt by the computer of an interrupt signal, all entries in the jump table means corresponding to said altered base point containing the same address of a location in said second store means, said location in said second store means holding a string of instructions selected from said host instruction set and adapted to respond to said interrupt.

7. A computer according to any one of Claims 4 to 6, wherein said control means maintains an instruction pointer containing the address in said first store means of the next instruction in said series of emulated instructions and wherein the string of host instructions held at each location in said second store means includes an instruction to update the said instruction pointer.

8. A computer according to any one of Claims 4 to 7, wherein said jump table means contains entries corresponding to pairs of certain operators which require no addressing mode, the location in said second store means corresponding to each of said jump table entries containing a host instruction string emulating both of the said operators.

9. A computer according to any one of Claims 4 to 8, wherein for a flag function such as parity, the control means is adapted to store at least part of the result of each operation affecting the flag function, the host instruction string held at each location in the second store means corresponding to a combination of operator and addressing mode logically dependent upon said flag function including one or more host instructions adapted to derive the current value of said flag function from said stored result or part result.

10. A computer according to any one of Claims 4 to 9, wherein certain instructions stored in said first store means at locations to which jumps are made in response to interrupt instructions from said set of emulated instructions, comprise pseudo emulated instructions the entry corresponding to which in said jump table means comprises the address in said second store means of a host instruction string adapted to perform the interrupt function.

11. A process for controlling the operation of a data processing unit having a host instruction set, in accordance with a received series of instructions from an emulated instruction set, where at least some of said emulated instructions each comprise an operation code and a qualifying code, there being a finite number of permissible combinations of operation code and qualifying code, characterised in that the process comprises the steps of storing a plurality of host instruction strings, one for each said permissible combination of operation code and qualifying code; determining for each emulated instruction the particular combination of operation code and qualifying code; accessing the appropriate host instruction string through said determined combination without further decoding and inputting the host instruction string to the data processing unit.

## Patentansprüche

1. Einrichtung zur Software-Emulation mit einem Rechner, der einen Host-Befehlssatz hat und der durch sequentielle Befehle aus einem emulierten Befehlssatz zu steuern ist, wobei eine beträchtliche Anzahl emulierter Befehle einen Operationscode, welcher aus einem Satz von n derartiger Codes ausgewählt ist, und einen Qualifiziercode aufweisen, der aus einem Satz von m derartiger Codes ausgewählt ist, und wobei der Rechner eine Verarbeitungseinrichtung, eine erste Speichereinrichtung, um eine Reihe von Befehlen aus dem emulierten Befehlssatz zu speichern, und eine zweite Speichereinrichtung aufweist, um Befehle aus dem Host-Befehlssatz zu halten, dadurch **gekennzeichnet,** daß die zweite Speichereinrichtung etwa n x m Speicherstellen hat, wobei jede Speicherstelle einer konsistenten Kombination aus Operations- und Qualifiziercode entspricht, die zweite Steuereinrichtung an jeder Speicherstelle eine Reihe von Host-Befehlen hält, die dem Operations- und dem Qualifiziercode entsprechen, und daß eine Steuereinrichtung vorgesehen ist, um im wesentlichen in jedem emulierten Befehl die Kombination aus Operations- und Qualifiziercode zu identifizieren, um über die Kombination und ohne ein weiteres Decodieren auf die Speicherstelle in der zweiten Speichereinrichtung Zugriff zu haben, welche der Kombination entspricht, und um anschließend in der Verarbeitungseinrichtung die Host-Befehlsfolgen einzugeben.

2. Einrichtung nach Anspruch 1, welcher die Steuereinrichtung Tabelleneinrichtung mit Einträgen aufweist, welche den jeweiligen Speicherstellen entsprechen, wobei jeder Eintrag die Adresse in der zweiten Speichereinrichtung der Befehlsfolge aufweist.

3. Einrichtung nach Anspruch 1 oder 2, bei welcher jede Host-Befehlsfolge vorgesehen ist, um die Speichereinrichtung mit Information zu versorgen, welche in Beziehung zu der Adresse in der ersten Speichereinrichtung des nächsten Befehls steht.

4. Einrichtung nach Anspruch 1, bei welcher die Steuereinrichtung eine Sprungtabelleneinrichtung aufweist, die im wesentlichen für jede zulässige Kombination des Operations- und des Qualifiziercodes einen Eintrag hat, welche die Adresse der entsprechenden Speicherstelle in der zweiten Speichereinrichtung aufweist.

5. Einrichtung nach Anspruch 4, bei welcher der letzte Befehl in der Folge von Befehlen, die an jeder Speicherstelle in der zweiten Speichereinrichtung gehalten sind, einen Sprungbefehl mit einem Bezug zu dem Eintrag in der Sprungtabelle aufweist, welcher dem nächsten Befehl in der Reihe von Befehlen entspricht, die in der ersten Speichereinrichtung gespeichert sind.

6. Einrichtung nach Anspruch 4 oder 5, bei welcher die Steuereinrichtung verwendet wird, um die Sprungtabelleneinrichtung über einen Basispunkt mit Hinweisen zu versehen und ferner verwendet wird, um den Basispunkt zu ändern, wenn von dem Rechner ein Unterbrechungssignal empfangen worden ist, wobei alle Einträge in der Sprungtabelleneinrichtung dem geänderten Basispunkt entsprechen, welcher dieselbe Adresse einer Speicherstelle in der zweiten Speichereinrichtung enthält, wobei die Speicherstelle in der zweiten Speichereinrichtung eine Folge von Befehlen hält, welche aus dem Host-Befehlssatz ausgewählt und angewendet sind, um auf die Unterbrechung anzusprechen.

7. Einrichtung nach einem der Ansprüche 4 bis 6, bei welcher die Steuereinrichtung einen Befehlszeiger hält, welcher die Adresse in der ersten Speichereinrichtung des nächsten Befehls in der Reihe von emulierten Befehlen enthält, und bei welcher die Folge von Host-Befehlen, die an jeder Stelle in der zweiten Speichereinrichtung gehalten sind, einen Befehl enthält, um den Befehlszeiger zu aktualisieren.

8. Einrichtung nach einem der Ansprüche 4 bis 7, bei welcher die Sprungtabelleneinrichtung Einträge enthält, die Paaren von bestimmten Operatoren entsprechen, welche keinen Adressiermode erfordern, wobei die Stelle in der zweiten Speichereinrichtung jedem der Sprungtabelleneinträge entspricht, die eine Host-Befehlsfolge enthalten, welche die beiden Operatoren emuliert.

9. Einrichtung nach einem der Ansprüche 4 bis 8, bei welcher für eine Flag-Funktion, wie eine Parität, die Steuereinrichtung verwendet wird, um zumindest einen Teil des Ergebnisses jeder Operation zu speichern, welche die Flag-Funktion beeinflußt, wobei die Host-Befehlsfolge, die an jeder Stelle in der zweiten Speichereinrichtung gehalten ist, einer Kombination von Operator und Adressiermode entspricht, was logisch von der Flag-Funktion abhängt, welche einen oder mehrere Host-Befehle enthält, die verwendet werden, um den augenblicklichen Wert der Flag-Funktion aus dem gespeicherten Ergebnis oder Teilergebnis herzuleiten.

10. Einrichtung nach einem der Ansprüche 4 bis 9, bei welcher bestimmte Befehle, die in der ersten Speichereinrichtung an Stellen gespeichert sind, an welchen Sprünge entsprechend Unterbrechungsbefehlen aus dem Satz emulierter Befehle gemacht werden, pseudo-emulierte Befehle aufweisen, wobei der Eintrag, welcher demjenigen in der Sprungtabelleneinrichtung entspricht, die Adresse in der zweiten Speichereinrichtung einer Host-Befehlsfolge aufweist, die verwendet wird, um die Unterbrechungsfunktion durchzuführen.

11. Verfahren, um die Operation einer Datenverarbeitungseinheit, die einen Host-Befehlssatz hat, entsprechend einer empfangenen Reihe von Befehlen aus einem emulierten Befehlssatz zu steuern, bei welchem zumindest einige der emulierten Befehle jeweils einen Operationscode und einen Qualifiziercode aufweisen, wobei es eine endliche Anzahl zulässiger Kombinationen von Operations- und Qualifiziercode gibt, dadurch **gekennzeichnet,** daß das Verfahren die Schritte aufweist;
eine Anzahl Host-Befehlsfolgen, und zwar eine für jede zulässige Kombination aus Operations- und Qualifiziercode speichern;
für jeden emulierten Befehl die besondere Kombination von Operations- und Qualifiziercode bestimmen;
auf die entsprechende Host-Befehlsfolge über die bestimmte Kombination ohne ein weiteres Decodieren Zugriff haben und
die Host-Befehlsfolge in die Datenverarbeitungseinheit eingeben.

## Revendications

1. Ordinateur comportant une ensemble d'instructions principales et apte à être commandé par des instructions séquentielles tirées d'un ensemble d'instructions émulées, un nombre important de ces instructions émulées comprenant un code opération sélectionné dans un ensemble de n codes de ce type et un code de qualification sélectionné à partir d'un ensemble de m codes de ce type, ordinateur comprenant des moyens de traitement; des premiers moyens de mémoire pour mémoriser des instructions à partir dudit ensemble d'instructions émulées, et des seconds moyens de mémoire pour conserver des instructions tirées dudit ensemble d'instructions principales, caractérisé en ce que lesdits seconds moyens de mémoire possèdent environ m x n emplacements, dont chacun correspond à une combinaison compatible d'un code opération et d'un code de qualification, le second moyen de mémoire conservant en chaque emplacement une série d'instructions principales correspondant dudit code opération et audit code de qualification, tandis qu'il est prévu des moyens de commande pour identifier, essentiellement dans chaque instruction émulée, la combinaison d'un code opération et d'un code de qualification, accéder au moyen de ladite combinaison et sans décodage supplémentaire, à l'emplacement situé dans lesdits seconds moyens de mémoire et correspondant à ladite combinaison, et introduire séquentiellement lesdits suites d'instructions principales dans lesdits moyens de traitement.

2. Ordinateur selon la revendication 1, dans lequel lesdits moyens de commande comprennent des moyens en forme de table comportant des entrées correspondant auxdits emplacements respectifs, chaque entrée comprenant l'adresse dans lesdits seconds moyens de mémoire de ladite suite d'instructions.

3. Ordinateur selon la revendication 1 ou 2, dans lequel chaque suite d'instructions principales est agencée de manière à fournir auxdits moyens de commande une information concernant l'adresse située dans lesdits moyens de mémoire de l'instruction suivante.

4. Ordinateur selon la revendication 1, dans lequel lesdits moyens de commande comprennent des moyens formant tâble de sauts comportant, essentiellement pour chaque combinaison admissible dudit code opération et dudit code de codification, une entrée comprenant une adresse de l'emplacement correspondant dans lesdits seconds moyens de mémoire.

5. Ordinateur selon la revendication 4, dans lequel la dernière instruction de la suite d'instructions concernant chaque emplacement dans les seconds moyens de mémoire comprend une instruction de sauts en référence à l'entrée dans ladite table de sauts appropriée pour l'instruction suivante dans ladite suite d'instructions mémorisée dans lesdits premiers moyens de mémoire.

6. Ordinateur selon la revendication 4 ou 5, dans lequel lesdits moyens de commande sont adaptés pour se référer auxdits moyens formant table de sauts par l'intermédiaire d'un point de base et sont en outre aptes à modifier ledit point de base lors de la réception d'un signal d'interruption par l'ordinateur, toutes les entrées dans les moyens formant table de sauts correspondant audit point de base modifié contenant la même adresse d'un emplacement dans lesdits seconds moyens de mémoire, ledit emplacement dans lesdits seconds moyens de mémoire retenant une suite d'instructions sélectionnées à partir dudit ensemble d'instructions principales et aptes à répondre à ladite interruption.

7. Ordinateur selon l'une quelconque des revendications 4 à 6, dans lequel lesdits moyens de commande conservent un pointeur d'instructions contenant l'adresse, dans lesdits premiers moyens de mémoire, de l'instruction suivante de ladite série d'instructions émulées, et dans lequel la suite d'instructions principales conservées en chaque emplacement dans lesdits seconds moyens de mémoire comprend une instruction servant à mettre à jour ledit pointeur d'instructions.

8. Ordinateur selon l'une quelconque des revendications 4 à 7, dans lequel lesdits moyens formant table de sauts contiennent des entrées correspondant à des couples de certains opérateurs, qui ne requièrent aucun mode d'adressage, l'emplacement à l'intérieur desdits seconds moyens de mémoire correspondant à chacune desdites entrées dans la table de sauts contenant une suite d'instructions principales émulant lesdits deux opérateurs.

9. Ordinateur selon l'une quelconque des revendications 4 à 8, dans lequel pour une fonction de drapeau telle qu'une parité, les moyens de commande sont adaptés pour mémoriser au moins une partie du résultat de chaque opération affectant la fonction de drapeau, la suite d'instructions principales retenue en chaque emplacement dans les seconds moyens de mémoire correspondant à une combinaison d'un opérateur et d'un mode d'adressage dépendant logiquement de ladite fonction de drapeau et incluant un ou plusieurs instructions principales aptes à fournir la valeur actuelle de ladite fonction de drapeau à partir dudit résultat ou dudit résultat partiel, mémorisé.

10. Ordinateur selon l'une quelconque des revendications 4 à 9, dans lequel certaines instructions mémorisées dans lesdits premiers moyens de mémoire en des emplacements auxquels des sauts sont exécutés en réponse à des instructions d'interruption tirées dudit ensemble émulé, comprennent des pseudo-instructions émulées, l'entrée correspondant à ces instructions dans lesdits moyens formant table de sauts comprenant l'adresse, présente dans lesdits seconds moyens de mémoire, d'une suite d'instructions principales aptes à exécuter la fonction d'interruption.

11. Procédé pour commander le fonctionnement d'une unité de traitement de données comportant un ensemble d'instructions principales, conformément à une série d'instructions reçues à partir d'un ensemble d'instructions émulées, dans lequel au moins certaines desdites instructions émulées comprennent chacune un code opération et un code de qualification, le nombre fini de combinaisons admissibles d'un code opération et d'un code de qualification étant prévu, caractérisé en ce que le procédé comprend les étapes consistant à mémoriser une pluralité de suites d'instructions principales, pour chacune desdites combinaisons admissibles d'un code opération et d'un code de qualification; déterminer, pour chaque instruction émulée, la combinaison particulière d'un code opération et d'un code de qualification; accéder à la suite appropriée d'instructions principales par l'intermédiaire de ladite combinaison déterminée sans décodage supplémentaire ni introduction supplémentaire de la suite d'instructions principales dans l'unité de traitement de données.
